Europäisches Patentamt

European Patent Office

Office européen des brevets

(11) Veröffentlichungsnummer: **0 231 046 B1**

(12) **EUROPÄISCHE PATENTSCHRIFT**

(45) Veröffentlichungstag der Patentschrift: **20.01.93**

(21) Anmeldenummer: **87200073.2**

(22) Anmeldetag: **19.01.87**

(51) Int. Cl.⁵: **H02P 6/02**

(54) **Kommutierungsschaltung für einen kollektorlosen Gleichstrommotor.**

(30) Priorität: **25.01.86 DE 3602227**

(43) Veröffentlichungstag der Anmeldung:
**05.08.87 Patentblatt 87/32**

(45) Bekanntmachung des Hinweises auf die
Patenterteilung:
**20.01.93 Patentblatt 93/03**

(84) Benannte Vertragsstaaten:
**AT DE FR GB IT NL**

(56) Entgegenhaltungen:
**DE-A- 2 604 638**
**US-A- 3 611 081**

**PATENT ABSTRACTS OF JAPAN, Band 9, Nr.
15 (E-291)[1738], 22. Januar 1985; & JP - A -
59 162 793**

**PATENT ABSTRACTS OF JAPAN, Band 10,
Nr. 95 (E-395)[2152], 12. April 1986; & JP - A -
60 237 881**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT NL AT**

(72) Erfinder: **Radziwill, Wolfgang, Dr.
Schönrathstrasse 44
W-5100 Aachen(DE)**
Erfinder: **Döring, Günter
Glück-Auf-Strasse 31
W-5102 Würselen(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

**Beschreibung**

Die Erfindung bezieht sich auf eine Steuerschaltung für einen kollektorlosen Gleichstrommotor ohne Kommutierungssensor mit einem permanentmagnetischen Läufer beliebiger Polpaarzahl und einem Ständer und wenigstens zwei Wicklungen, die ein Mehrphasen-System bilden, von dem jede Phase in Abhängigkeit von Spannungen, die das permanentmagnetische Feld des Läufers in die Wicklungen induziert, mittels elektronischer Schaltelemente je nach Kommutierungszustand zur Durchführung von Kommutierungsschritten an den Minus- und/oder Plus-Pol einer Gleichstromquelle schaltbar ist, wobei in der Steuerschaltung ein Vergleichssignal erzeugt wird, das angibt, ob das Vorzeichen derjenigen Wicklungsspannung, die nicht mittels der elektronischen Schaltelemente an die Gleichstromquelle geschaltet ist, mit einem in Abhängigkeit vom jeweiligen Kommutierungszustand vorgegebenen Vorzeichen übereinstimmt, und andernfalls bei nicht übereinstimmendem Vorzeichen kommutiert wird.

Bei elektronisch kommutierten Gleichstrommotoren ist es zur richtigen Kommutierung erforderlich, die momentane Läuferposition zu ermitteln. Dies geschieht normalerweise mittels Sensoren (Fotodioden, Hall-Generatoren etc.). Um den unwirtschaftlichen Einbau solcher Bauelemente und deren Platzverbrauch im Motor zu vermeiden, ist es bekannt, die in die Ankerwicklungen induzierten Spannungen in den jeweils stromlosen Augenblicken zu messen und daraus der jeweiligen Läuferposition entsprechende Signale zur Fortschaltung der Kommutierung zu gewinnen. Die Größe dieser induzierten Spannungen ist jedoch von den Motordaten und darüber hinaus auch von der Drehzahl des Motors abhängig. Aus diesem Grunde ist die Läuferstellung auf diese Weise nur bis zu einer gewissen Mindestdrehzahl feststellbar, unterhalb derer eine richtige Kommutierung nicht mehr gewährleistet ist. Dies gilt insbesondere für den Motorstillstand, so daß ein einwandfreier Anlauf des Motors nicht gewährleistet ist und eine spezielle Anlaufschaltung erforderlich ist.

Aus der DE-OS 26 04 638 ist eine Steuerschaltung für einen kollektorlosen Gleichstrommotor ohne Kommutierungssensor mit einem permanentmagnetischen Läufer bekannt, bei der das Vorzeichenbild der in die drei Phasen induzierten Spannungen in Relation zu einer Bezugsspannung zur Kommutierung herangezogen wird, wobei ein Vergleichssignal erzeugt wird, das angibt, ob das Vorzeichen derjenigen Wicklungsspannung, die nicht für Schaltelemente an die Gleichstromquelle geschaltet ist, mit einem vom jeweiligen Kommutierungszustand vorgegebenen Vorzeichen übereinstimmt und bei Nichtübereinstimmung kommutiert wird. Wegen des für die Pegelmessung erforderlichen gemeinsamen Bezugspotentials ist die Steuerschaltung nur für Motoren in Sternschaltung mit herausgeführten Sternpunkt anwendbar. Darüber hinaus benötigt auch diese Schaltung eine spezielle Startlogik. Überdies sind die Referenzspannungen verhältnismäig hoch, so daß die Ausgleichsvorgänge mit parasitären Null-Stellen kein Problem darstellen. Betragen die Referenzspannungen jedoch nur einige hundert mV, dann können Ausgleichsvorgänge mit parasitären Null-Stellen zu einer falschen Kommutierung führen.

Es ist Aufgabe der Erfindung, eine ohne Sensoren arbeitende Kommutierungsschaltung für einen kollektorlosen Gleichstrommotor zu schaffen, die bei Motoren beliebiger Bauart mit mehrphasiger Ständerwicklung und permanentmagnetischem Läufer in allen Drehzahlbereichen und beim Anlauf eine falsche Kommutierung vermeidet.

Die Aufgabe ist erfindungsgemäß dadurch gelöst, daß in der Steuerschaltung

- das Vergleichssignal an einem Ausgang einer Positionsmeßschaltung, während der Zeit, in der ein Schiebesignal am Ausgang einer Verzögerungsschaltung den Wert 1 hat, ausgeblendet wird, wobei die Dauer dieses Schiebesignals von der Zeit abhängt, in der in den Wicklungen durch Abschalten der elektronischen Schaltelemente in einer Leistungsschaltung bedingte Ausgleichsvorgänge mit möglichen parasitären Null-Stellen auftreten, und
- kommutiert wird, wenn das Schiebesignal, abhängig vom Vergleichssignal, das ausgeblendet wird, wenn, ermittelt durch ein Signal, die Meßspannung eine vorgebbare positive oder negative Spannung über- bzw. unterschreitet, bei nicht übereinstimmenden Vorzeichen einen Ausgangsimpuls abgibt.

Die Steuerschaltung vergleicht zunächst die Spannung derjenigen Wicklung, die nicht an die Gleichstromquelle geschaltet ist und in der Spannungen induziert werden, mit einem in Abhängigkeit von dem jeweils herrschenden Kommutierungszustand vorgegebenen Vorzeichen. Dieses so entstehende Vergleichssignal wird in den Zeiten ausgeblendet, in denen infolge des Abschaltens der Stromquelle Ausgleichsvorgänge mit möglichen parasitären Null-Stellen auftreten können. Zu den übrigen Zeiten wird die Vergleichsspannung ausgewertet und in Abhängigkeit von dieser Auswertung einen Kommutierungsschritt weitergeschaltet.

Auf diese Weise werden keine falschen Kommutierungen ausgelöst, da gegebenenfalls auftretende parasitäre Null-Stellen ausgeblendet werden. Ein weiterer Vorteil ist, daß die Schaltung über einen großen Drehzahlbereich sicher arbeiten kann, da die absolute Größe der in die Wicklungen induzierten Spannungen keine Rolle spielt, weil nur das Vorzeichen der induzierten Spannungen betrachtet wird. Die Schaltung erfordert keine Sensoren oder ähnliches.

Nach einer weiteren Ausgestaltung ist vorgesehen, daß

- eine Meßspannung durch Subtraktion einer herausgeführten oder berechneten Sternpunktspannung von einem Signal berechnet wird, welches sich aus den Intervallen der Wicklungsspannungen zusammensetzt, in denen die Wicklungen nicht mittels der elektronischen Schaltelemente an die Gleichstromquelle geschaltet sind,
- ein Soll-Phasensignal (sui) erzeugt wird, das das für den jeweils herrschenden Kommutierungszustand des Motors richtige Vorzeichen der Meßspannung vorgibt,
- ein Vergleichssignal erzeugt wird, das angibt, ob die Vorzeichen der Meßspannung und das von dem Soll-Phasensignal vorgegebene Vorzeichen gleich sind,
- das Vergleichssignal während der Zeiten für eine vorgegebene Dauer ausgeblendet wird, in denen in den Wicklungen durch Abschalten der elektronischen Schaltelemente bedingte Ausgleichsvorgänge mit möglichen parasitären Nullstellen auftreten,
- ausgelöst durch das Vergleichssignal bei verschiedenen Vorzeichen der Meßspannung und des durch das Soll-Phasensignal (sui) vorgegebenen Soll-Vorzeichens die elektronischen Schaltelemente einen Kommutierungsschritt weiter geschaltet werden.

Diese Steuerschaltung wertet einen Vergleich der Vorzeichen der Meßspannung mit einem Soll-Vorzeichen lediglich zu den Zeiten aus, in denen keine Ausgleichsvorgänge in den Wicklungen mit den möglichen parasitären Nullstellen auftreten, und schaltet in Abhängigkeit von diesem Vorzeichenvergleich die elektronischen Schaltelemente einen Kommutierungsschritt weiter. Dies bedeutet, daß nach jeder Kommutierung die induzierte Spannung nicht sofort bewertet wird, sondern erst nach einer Verzögerungszeit, die so gewählt ist, daß alle Ausgleichsvorgänge mit den gegebenenfalls auftretenden nachfolgenden parasitären Nullstellen ausgeblendet werden. Nach dieser Ausblendzeit wird dann um einen Kommutierungsschritt weiter geschaltet, wenn die Meßspannung das Vorzeichen wechselt. Infolge dieser Kommutierung gibt anschließend das Soll-Phasensignal sui ein anderes Soll-Vorzeichen an. Dies wird mit dem Vorzeichen der Meßspannung verglichen, nachdem wiederum für eine vorgegebene Zeitdauer die Meßspannung ausgeblendet wurde, um die Ausgleichsvorgänge mit ihren parasitären Nullstellen nicht zu berücksichtigen. Nach dieser Ausblendzeitdauer wird dann wiederum das durch das Soll-Phasensignal sui angegebene Vorzeichen mit dem der Meßspannung verglichen. Bei richtiger Kommutierung haben diese dann zunächst gleiches Vorzeichen, bis das Vorzeichen der Meßspannung wechselt, worauf einen weiteren Kommutierungsschritt weitergeschaltet wird.

Auf diese Weise arbeitet die Steuerschaltung sehr störsicher, da die Ausgleichsvorgänge mit den gegebenenfalls auftretenden parasitären Nullstellen sicher ausgeblendet werden und keine falschen Kommutierungen auslösen können. Außerdem arbeitet die Schaltung sicher über einen weiten Drehzahlbereich, da die absolute Größe der induzierten Spannungen keine entscheidende Rolle spielt, weil nur deren Vorzeichen zur Kommutierung herangezogen wird. Da die Steuerschaltung nicht direkt die in die zwei oder mehr Phasen induzierten Spannungen, sondern die daraus berechnete Meßspannung zur Bestimmung der Läuferposition heranzieht, ist es bei Motoren in Sternschaltung nicht erforderlich, den Sternpunkt aus dem Motor herauszuführen. Darüber hinaus kann die Schaltung auch an Motoren in Dreiecksschaltung betrieben werden. Selbstverständlich kann bei entsprechenden Motoren die Sternpunktspannung herausgeführt werden, so daß diese in der Schaltung nicht berechnet werden muß.

Nach einer weiteren Ausgestaltung der Erfindung ist vorgesehen, daß die elektronischen Schaltelemente zusätzlich dann einen Kommutierungsschritt weiter geschaltet werden, wenn die Schaltelemente für eine vorgegebene Zeitdauer nicht durch das Vergleichssignal weitergeschaltet wurden.

Beim Einschalten des Motors oder nach einem gewaltsamen Abbremsen des Läufers werden die induzierten Spannungen und infolgedessen auch die Meßspannung den Wert Null haben. Da dann also kein Vorzeichenwechsel der Meßspannung erfolgt, kann auch die Läuferposition nicht bestimmt und der Motor nicht richtig kommutiert werden, so daß der Läufer nicht anläuft. Aus diesem Grunde wird, wenn während einer vorgegebenen Zeitdauer der Motor keinen Kommutierungsschritt weitergeschaltet wurde, was ein Maß dafür ist, daß der Läufer entweder zu langsam dreht oder stillsteht, zwangsweise einen Kommutierungsschritt weitergeschaltet. Nach diesem Kommutierungsschritt arbeitet die Steuerschaltung normal weiter, d. h. es wird nach der Ausblendzeit das Vorzeichen der Meßspannung mit dem Soll-Vorzeichen verglichen, und bei falscher Läuferposition, d. h. bei verschiedenen Vorzeichen der beiden Signale, wird einen Kommutierungsschritt weitergeschaltet. Auf diese Weise wird schnell der zu der jeweiligen Läuferposition richtige Kommutierungszustand erreicht, so daß der Motor anschließend hochläuft. Auf diese Weise wird der richtige Kommutierungszustand nach dem Einschalten des Motors auch dann, wenn der Läufer gewaltsam zum Stillstand gebracht wurde, erreicht.

Nach einer weiteren Ausgestaltung der Erfindung ist vorgesehen, daß die Schaltzustände der elektronischen Schaltelemente und das Soll-Phasensignal mittels binärer Verknüpfungen der Ausgänge eines Schieberegisters gewonnen werden, das sechs Zustände zyklisch durchläuft und mittels eines Schiebesignals fortgeschaltet wird, das entweder durch das Vergleichssignal erzeugt wird oder immer dann, wenn die Schaltelemente für eine vorgegebene Zeitdauer nicht durch das Vergleichssignal weitergeschaltet wurden.

Der Kommutierungszustand des Motors ergibt sich aus der Position des Schieberegisters, das sechs Zustände zyklisch durchläuft. Die Ausgänge des Schieberegisters liefern mittels binärer Verknüpfungen die Signale für die Schaltelemente und das Soll-Phasensignal, das das richtige Vorzeichen der Meßspannung angibt. Das Schieberegister wird mittels des Schiebesignals sh fortgeschaltet. Bleibt dieses Schiebesignal für eine vorgegebene Zeitdauer aus, wird das Schieberegister ebenfalls einen Schaltzustand weiter geschaltet. Auf diese Weise können mittels Schieberegister und binärer Verknüpfungen sowohl die Steuersignale für die Schaltelemente, wie auch Steuersignale zur Gewinnung der fiktiven Sternspannung und zur Ermittlung der Läuferposition gewonnen werden.

Nach einer weiteren Ausgestaltung der Erfindung ist vorgesehen, daß die Meßspannung mittels eines Analogmultiplexers und einer Analogrechenschaltung ermittelt wird.

Wenn die Sternpunktspannung nicht aus dem Motor herausgeführt ist, muß sie infolgedessen rechnerisch ermittelt werden. Die Meßspannung wird mittels eines Analogmultiplexers und einer Analogrechenschaltung gewonnen. Mit Hilfe des Analogmultiplexers werden dabei immer beispielsweise bei einem Motor mit drei Wicklungen die Teilintervalle der Dreiphasen-Spannungen zusammengefügt, in denen Ausgleichsvorgänge und anschließend induzierte Spannungen auftreten. Der Analogmultiplexer kann beispielsweise durch Signale gesteuert werden, die mittels binärer Verknüpfungen der Ausgänge des Schieberegisters gewonnen werden.

Nach einer weiteren Ausgestaltung der Erfindung ist vorgesehen, daß das Vergleichssignal si während der Zeiten ausgeblendet wird, in denen die Meßspannung eine vorgegebene positive oder eine vorgegebene negative Spannung über- bzw. unterschreitet.

Da das Vergleichssignal während der Zeiten, in denen Ausgleichsvorgänge in den Wicklungen auftreten, eine falsche Information liefert, wird das Vergleichssignal während dieser Zeiten ausgeblendet. Zu diesem Zweck wird laufend geprüft, ob die Meßspannung eine vorgegebene untere Spannung ($U_{r2}$) unterschreitet oder eine vorgegebene positive Spannung ($U_{r3}$) überschreitet. Ist dies der Fall, so finden in einer der Phasen Ausgleichsvorgänge statt, und das Vorzeichen der Meßspannung liefert falsche Ergebnisse. Aus diesem Grunde wird während dieser Zeiten das Vergleichssignal ausgeblendet, d. h. der Vergleich des Vorzeichens der Meßspannung und des durch das Soll-Phasensignal sui vorgegebenen Vorzeichens wird während dieser Zeit nicht ausgewertet.

Nach einer weiteren Ausgestaltung der Erfindung ist vorgesehen, daß das Vergleichssignal si zur Beseitigung parasitärer Nullstellen zusätzlich für eine vorgegebene Zeit nach jedem Weiterschalten der elektronischen Schaltelemente und für eine vorgegebene Zeit nach jedem Ausgleichsvorgang ausgeblendet wird.

Damit die gegebenenfalls vor und hinter den Ausgleichsvorgängen auftretenden parasitären Nullstellen der Meßspannung nicht fälschlicherweise eine Kommutierung auslösen, wird das Vergleichssignal si nicht nur während der Ausgleichsvorgänge, sondern außerdem für vorgegebene Zeiten vor und hinter den Ausgleichsvorgängen ausgeblendet, d. h. nicht weiter ausgewertet.

Nach einer weiteren Ausgestaltung der Erfindung ist vorgesehen, daß bei der Erzeugung des Vergleichssignals si das Vorzeichen der Meßspannung daraus bestimmt wird, ob die Sternspannung eine kleine vorgegebene Spannung über- oder unterschreitet, deren Vorzeichen umgekehrt ist zu dem durch das Soll-Phasensignal für die Sternspannung angegebenen Vorzeichen.

Nach einer weiteren Ausgestaltung der Erfindung ist vorgesehen, daß die Dauer der vorgegebenen Zeit, während der das Vergleichssignal nach jedem Ausgleichsvorgang ausgeblendet wird, abhängig von der Dauer des Ausgleichsvorganges. ist. Dies kann erforderlich sein, wenn (z. B. bei Motoren mit hohen Wirbelstromverlusten) der Ausgleichsstrom nicht schnell genug abklingt.

Da die Meßspannung $u_i$ bei sehr niedriger Drehzahl sehr kleine Werte und bei Motorstillstand den Wert Null annimmt, könnte eine Vergleichsschaltung, die das Vorzeichen der Meßspannung $u_i$ und das durch das Soll-Phasenlagensignal sui vorgegebene Vorzeichen vergleicht, einen undefinierten Zustand einnehmen bzw. anfangen zu schwingen. Aus diesem Grunde wird das Vorzeichen der Meßspannung $u_i$ danach ermittelt, ob $u_i$ eine kleine vorgegebene Spannung $U_{r1}$ über- oder unterschreitet. Das Vorzeichen dieser Spannung $U_{r1}$ wird dabei in Abhängigkeit von dem Soll-Phasensignal sui in der Weise umgeschaltet, daß bei durch das sui-Signal vorgegebenem positivem Soll-Vorzeichen die Vergleichsspannung $U_{r1}$ negativ ist und bei negativen Soll-Vorzeichen die Vergleichsspannung positiv ist. Auf diese Weise wird bei sehr kleinen induzierten Spannungen und bei Motorstillstand immer ein definiertes Vorzeichen der Meßspannung

4

gewonnen, so daß nicht die Gefahr besteht, daß nachfolgende Schaltungsteile zum Schwingen angeregt werden.

Ein Ausführungsbeispiel der Erfindung wird anhand der Zeichnungen näher erläutert. Es zeigen:

Fig. 1 das Blockschaltbild einer Ausführungsform der Steuerschaltung für ein Dreiphasen-System,

Fig. 2 das Schaltbild der Signalformerschaltung der Steuerschaltung nach Fig. 1,

Fig. 3 das Schaltbild der Positionsmeßschaltung der Steuerschaltung nach Fig. 1,

Fig. 4 das Schaltbild der Verzögerungsschaltung der Steuerschaltung nach Fig. 1,

Fig. 5 einige in der Steuerschaltung auftretende Signale und Spannungen,

Fig. 6 den Ablauf einer Kommutierungsfortschaltung, dargestellt anhand der Meßspannung und einiger in der Steuerschaltung auftretender Signale und Spannungen,

Fig. 7 eine Kommutierungsfortschaltung nach Fig. 6, jedoch nach Stillstand des Läufers und mit falschem Kommutierungszustand nach der Kommutierungsfortschaltung,

Fig. 8 das Schaltbild einer Variante der Positionsmeßschaltung nach Fig. 3,

Fig. 9 das Schaltbild einer Variante der Verzögerungsschaltung nach Fig. 4.

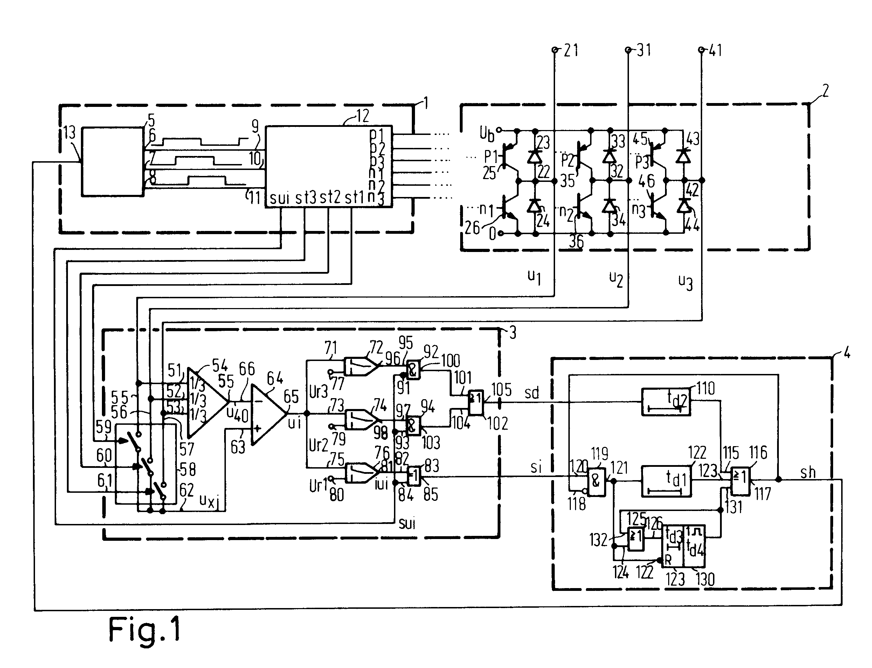

In Fig. 1 ist das Blockschaltbild eines Ausführungsbeispieles der Steuerschaltung für einen kollektorlosen Gleichstrommotor mit drei Ständerwicklungen, die ein Dreiphasen-System bilden, dargestellt. Die Steuerschaltung gliedert sich in vier Schaltungsteile, nämlich in die Signalformerschaltung 1, die Leistungsschaltung 2, die Positionsmeßschaltung 3 und die Verzögerungsschaltung 4. Die Signalformerschaltung 1 weist ein Schieberegister 5 auf, dessen Ausgänge 6, 7 und 8 mit Eingängen 9, 10 und 11 einer Verknüpfungsschaltung 12 verbunden sind. Das Schieberegister 5 wird mittels eines Schiebesignales sh, das dem Schieberegister 5 über seinen Eingang 13 zugeführt wird, weitergeschaltet. In der Verknüpfungsschaltung 12 werden mittels binärer Verknüpfungen zum einen Schaltsignale $p_1$, $p_2$, $p_3$, $n_1$, $n_2$ und $n_3$ für die Schaltelemente und zum anderen ein Soll-Phasensignal sui und drei Steuersignale st1, st2, st3 für die Positionsmeßschaltung gewonnen.

Die Leistungsschaltung 2 schaltet die Wicklungen der drei Phasen des Ständer in Abhängigkeit vom durch die Steuersignale $p_1$ bis $n_3$ vorgegebenen Kommutierungszustand an den positiven oder negativen Pol der Stromquelle. Ein Wicklungsanschluß 21 einer ersten Wicklung des Motors ist mit einem Verbindungspunkt 22 verbunden. Von diesem Verbindungspunkt 22 führt eine erste Diode 23 zum positiven und eine zweite Diode 24 zum negativen Pol der Stromquelle. Die Diode 23 ist dabei anodenseitig mit dem Verbindungspunkt 22 und die Diode 24 kathodenseitig mit dem Verbindungspunkt 22 verbunden. Einem pnp-Transistor 25 ist an der Basis das Schaltsignal $p_1$ zugeführt. Der Transistor 25 ist mit seinem Kollektor mit dem Verbindungspunkt 22 und mit seinem Emitter mit dem positiven Pol der Stromquelle verbunden. Einem npn-Transistor 26 ist an der Basis das Schaltsignal $n_1$ zugeführt. Dieser Transistor 26 ist emitterseitig mit dem negativen Pol der Stromquelle und kollektorseitig mit dem Verbindungspunkt 22 verbunden. Diese Schaltung bewirkt, daß bei Low-Pegel des Schaltsignals $p_1$ der Wicklungsanschluß an den positiven Pol der Stromquelle geschaltet wird und bei High-Pegel des Schaltsignals $n_1$ an den negativen Pol. Die beiden Dioden 23 und 24 dienen dazu, nach dem Abschalten einer der beiden Transistoren die dann durch Ausgleichsvorgänge auftretenden Überspannungen gegen den positiven bzw. negativen Pol der Stromquelle abzuführen.

Ein Wicklungsanschluß 31 einer zweiten Wicklung des Stators ist mit einem Verbindungspunkt 32 verbunden. Dieser Verbindungspunkt ist in gleicher Weise wie der der ersten Wicklung über eine Diode 33 und einen pnp-Transistor 35, der durch das Schaltsignal $p_2$ geschaltet wird, mit dem positiven Pol der Stromquelle und über eine Diode 34 und einen npn-Transistor 36, dem basisseitig das Schaltsignal $n_2$ zugeführt wird, mit dem negativen Pol der Stromquelle verbunden. Ein Wicklungsanschluß 41 einer dritten Wicklung des Stators ist, ebenso wie die beiden anderen Wicklungsanschlüsse, mittels Dioden 43 und 44 und Transistoren 45 und 46 mit der Stromquelle verbunden. Der Basis des pnp-Transistors 45 ist das Schaltsignal $p_3$ und das Basis des npn-Transistors 46 das Schaltsignal $n_3$ zugeführt. Die Leistungsschaltung 2 schaltet also bei Low-Pegel des Schaltsignals $p_1$ den Wicklungsanschluß 21 der ersten Wicklung an den positiven Pol der Stromquelle und bei Low-Pegel des Schaltsignals $p_2$ den Wicklungsanschluß 31 der zweiten und bei Low-Pegel des Schaltsignals $p_3$ den Wicklungsanschluß 41 der dritten Wicklung. In gleicher Weise werden die Wicklungen an den negativen Pol der Sromquelle bei High-Pegel der Schaltsignale $n_1$, $n_2$ oder $n_3$ geschaltet.

Die Wicklungsanschlüsse 21, 31 und 41, die die drei Wicklungsspannungen $u_1$, $u_2$ und $u_3$ führen, sind ferner Eingängen 51, 52 und 53 einer Analogrechenschaltung 54 und Eingängen 55, 56 und 57 eines Analogmultiplexers 58 in der Positionsmeßschaltung 3 zugeführt. Drei weiteren Eingängen 59, 60 und 61 des Analogmultiplexers 58 sind die Steuersignale st1, st2 und st3 der Verknüpfungsschaltung 12 der Signalformerschaltung 1 zugeführt. Bei aktiviertem Steuersignal st1 wird das am Eingang 55 des Analogmultiplexers 58 anliegende Signal $u_1$ auf den Ausgang 62 des Analogmultiplexers 58 geschaltet. Das

EP 0 231 046 B1

Steuersignal st2 schaltet über den Eingang 60 des Analogmultiplexers 58 das Signal $u_2$ vom Wicklungsanschluß 31 auf den Ausgang 62 des Analogmultiplexers 58. Gleiches gilt für das Steuersignal st3 und das Signal $u_3$ des Wicklungsanschlusses 41. Das Signal am Ausgang 62 des Analogmultiplexers 58 wird mit $u_{xj}$ bezeichnet und setzt sich aus den Teilintervallen der Spannungen $u_1$, $u_2$ und $u_3$ zusammen, in denen Ausgleichsvorgänge und anschließend induzierte Spannungen auftreten. Dieses Signal $u_{xj}$ wird einem postiven Eingang 63 eines Operationsverstärkers 64 zugeführt. Die Analogrechenschaltung 54 multipliziert die drei Eingangssignale $u_1$, $u_2$ und $u_3$, die ihr über die Eingänge 51, 52 und 53 zugeführt sind, jeweils mit dem Faktor 1/3 und addiert die Signale. Der Ausgang 55 dieser Analogrechenschaltung 54 führt das Signal $u_{40}$, das dem negativen Eingang 66 des Operationsverstärkers 64 zugeführt ist. Der Operationsverstärker 64 weist einen Ausgang 65 auf, der das Signal $u_i$ führt. Dieses Signal $u_i$ stellt die berechnete Meßspannung dar. Das Signal $u_i$ wird einem ersten Eingang 71 eines ersten Komparators 72, einem ersten Eingang 73 eines zweiten Komparators 74 und einem ersten Eingang 75 eines dritten Komparators 76 zugeführt. Dem zweiten Eingang 77 des ersten Komparators 72 ist eine positive Vergleichsspannung $U_{r3}$ und dem zweiten Eingang 79 des zweiten Komparators 74 eine negative Vergleichsspannung $U_{r2}$ zugeführt. Diese beiden Vergleichsspannungen $U_{r2}$ und $U_{r3}$ sind so gewählt, daß sie lediglich bei Auftreten von Ausgleichsvorgängen durch die Meßspannung über- bzw. unterschritten werden. Einem zweiten Eingang 80 des dritten Komparators 76 ist eine kleine, jedoch von Null verschiedene Vergleichsspannung $U_{r1}$ zugeführt. Der Ausgang 81 des dritten Komparators 76 führt das Signal iui, das angibt, ob die errechnete Meßspannung die Vergleichsspannung $U_{r1}$ über- bzw. unterschreitet. Dieses Signal iui ist einem ersten Eingang 82 eines logischen Exclusiv-Oder-Gatters 83 zugeführt. Einem zweiten Eingang 84 des Gatters 83 ist das Soll-Phasensignal sui der Signalformerschaltung 1 zugeführt. Der Ausgang 85 des Gatters 83 führt das Signal si. Dieses Vergleichssignal si gibt an, ob das Soll-Vorzeichensignal sui und das durch Vergleich mit der Vergleichsspannung $U_{r1}$ und der Meßspannung gewonnene Signal iui gleiches Vorzeichen haben oder nicht. Das Signal si hat High-Pegel, wenn die Signale sui und iui ungleiches Vorzeichen haben, im anderen Falle Low-Pegel. Das Soll-Vorzeichensignal sui ist ferner einem invertierenden ersten Eingang 91 eines ersten Und-Gatters 92 und einem ersten Eingang 93 eines zweiten Und-Gatters 94 zugeführt. Ein erster Eingang 95 des ersten Und-Gatters 92 ist mit einem Ausgang 96 des ersten Komparators 72 und ein zweiter Eingang 97 des zweiten Und-Gatters 94 mit einem Ausgang 98 des zweiten Komparators 74 verbunden. Ein Ausgang 100 des ersten Und-Gatters 92 ist auf einen ersten Eingang 101 eines Oder-Gatters 102 und ein Ausgang 103 des zweiten Und-Gatters 94 auf einen zweiten Eingang 104 des Oder-Gatters 102 geführt. Der Ausgang 105 des Und-Gatters 102 führt das Signal sd. Dieses Signal sd führt dann High-Pegel, wenn die fiktive Sternspannung $u_i$ entweder die negative Vergleichsspannung $U_{r1}$ unter- oder die positive Vergleichsspannung $U_{r3}$ überschreitet.

In der Verzögerungsschaltung 4 wird nach jeder High-Low-Flanke des Signals sd in einem ersten Verzögerungsglied 110 ein Puls der Breite td2 erzeugt. Diese Ausgangssignale des Verzögerungsgliedes werden einem ersten Eingang 115 eines Oder-Gatters 116 zugeführt. Ein Ausgang 117 des Oder-Gatters 116 führt das Schiebesignal sh. Dieses Schiebesignal sh ist zum einen dem Eingang 13 des Schieberegistes 5 der Signalformerschaltung 1 und zum anderen einem invertierten Eingang 118 eines Und-Gatters 119 in der Verzögerungsschaltung 4 zugeführt. Ein zweiter Eingang 120 des Und-Gatters 119 ist mit dem Ausgang 85 des Exclusiv-Oder-Gatters 83 der Positionsmeßschaltung 3 verbunden und führt das Signal si. Ein Ausgang 121 des Und-Gatters 119 wird einem zweiten Verzögerungsglied 122, das nach jeder an seinem Eingang auftretenden Low-High-Flanke einen Puls der Breite tdl erzeugt.Das Ausgangssignal dieses Verzögerungsgliedes 122 ist einem zweiten Eingang 123 des Oder-Gatters 116 zugeführt. Der Ausgang 121 des Und-Gatters 119 ist ferner mit dem Reset-Eingang 122 eines Verzögerungsgliedes 123 und mit einem ersten Eingang 124 eines Oder-Gatters 125 verbunden. Ein Ausgang 126 des Oder-Gatters 125 ist mit dem Signaleingang des Verzögerungsgliedes 123 verbunden, das dieses Eingangssignal um eine vorgegebene Zeit $t_{d3}$ verzögert. Diesem Verzögerungsglied 123 ist ein Pulsformer 130 nachgeschaltet, der bei jeder High-Low-Flanke des Ausgangssignals der Verzögerungsschaltung 123 einen Puls der Länge $t_{d4}$ erzeugt. Dieses Signal ist einem dritten Eingang 131 des Oder-Gatters 116 und einem zweiten Eingang 132 des Oder-Gatters 125 zugeführt.

Der Ausgang 117 des Oder-Gatters 116, der das Shift-Signal sh führt, liefert also einen Ausgangspuls, wenn:

1. das Signal sd über das Verzögerungsglied 110 an den Eingang 115 des Oder-Gatters 116 gelangt,

2. die Und-Verknüpfung des Signals si und des rückgekoppelten, invertierten Schiebesignals sh über das Verzögerungsglied 122 an den zweiten Eingang 123 des Oder-Gatters 116 gelangt oder

3. während der Zeit $t_{d3}$ am Ausgang 121 des Und-Gatters 119 kein Signal erschienen ist und infolgedessen durch den Impulsformer $t_{d4}$ ein Impuls erzeugt wird, der an den dritten Eingang 131 des Oder-Gatters 116 geführt ist.

6

EP 0 231 046 B1

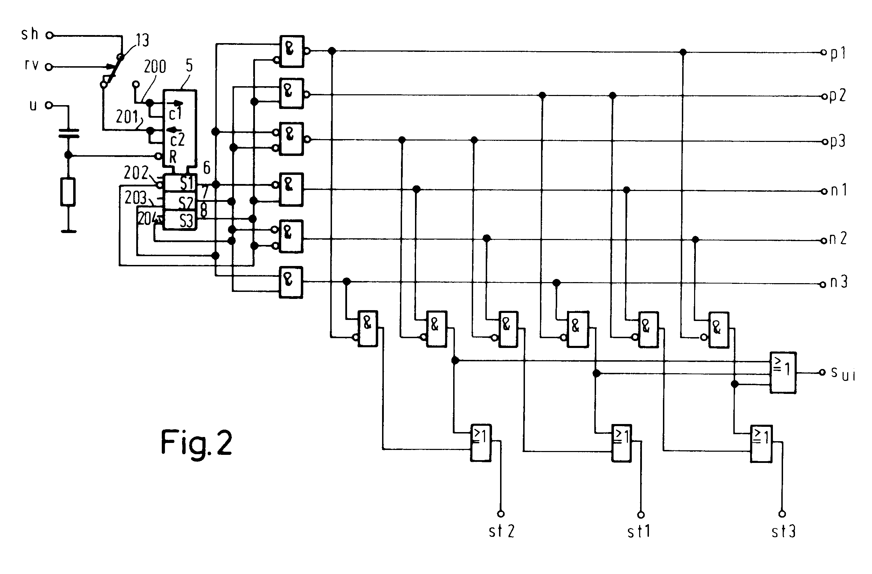

In der Fig. 2 ist die Signalformerschaltung 1 in einem detaillierten Schaltbild dargestellt. Das Schiebesignal sh gelangt über einen Eingang 13 der Schaltung in Abhängigkeit eines Signales rv entweder an einen ersten Schiebeeingang 200 des Schieberegisters 5 oder einen zweiten Schiebeeingang 201 des Schieberegisters 5. Wird das Signal sh dem ersten Eingang zugeführt, schiebt das Schieberegister vorwärts, im anderen Falle rückwärt. Mit dem Signal rv kann also die Schieberichtung des Schieberegisters gewählt werden und damit auch der Kommutierungsablauf und die Laufrichtung des Motors. Die drei Ausgänge 6, 7 und 8 des Schieberegisters 5 sind auf Eingänge 202, 203 und 204 des Schieberegisters geführt. Der Ausgang 6 ist dabei mit dem Eingang 203, der Ausgang 7 mit dem Eingang 204 und der Ausgang 8 mit dem Eingang 202 verbunden. Der Eingang 202 erscheint nach einem Schieben in positiver Richtung am Ausgang 6, das Eingangssignal des Eingangs 203 am Ausgang 7 und das Eingangssignal des Einganges 204 am Ausgang 8 des Schieberegisters 5. Die Schaltsignal $p_1$, $p_2$, $p_3$, $n_1$, $n_2$, $n_3$ für die Schaltelemente werden aus den Ausgangssignalen 6, 7 und 8 des Schieberegisters 5 durch logische Verknüpfungen, nämlich Inverter und Und-Gatter gewonnen. Der Ausgang 6 des Schieberegisters 5 führt das Signal S1, der Ausgang 7 das Signal S2 und der Ausgang 8 das Signal S3. Die Signale $p_1$ bis $n_3$ ergeben sich dann durch folgende logische Verknüpfungen der Signal S1, S2 und S3:


Tabelle 1:


| Signal | logische Verknüpfung |
|--------|----------------------|
| P1 | $S1 \wedge \overline{S3}$ |
| P2 | $\overline{S2} \wedge S3$ |
| p3 | $\overline{S1} \wedge \overline{S2}$ |
| n1 | $\overline{S1} \wedge S3$ |
| n2 | $\overline{S2} \wedge \overline{S3}$ |
| n3 | $S1 \wedge S2$ |


Die Steuersignale st1, st2 und st3 werden, ebenso wie das Soll-Vorzeichensignal sui wiederum mittels Invertern, Und-Gattern und Oder-Gattern aus den Steuersignalen $p_1$, $p_2$, $p_3$, $n_1$, $n_2$ und $n_3$ gewonnen. Die logische Verknüpfung der Signale ist dabei folgende:

Tabelle 2

| Signal | logische Verknüpfung |
|--------|----------------------|
| st1 | $(\overline{p_3} \wedge n_2) \vee (\overline{p_2} \wedge n_3)$ |
| st2 | $(\overline{p_1} \wedge n_3) \vee (\overline{p_3} \wedge n_1)$ |
| st3 | $(\overline{p_2} \wedge n_1) \vee (\overline{p_1} \wedge n_2)$ |
| sui | $(\overline{p_3} \wedge n_1) \vee (\overline{p_2} \wedge n_3) \vee (\overline{p_1} \wedge n_2)$ |

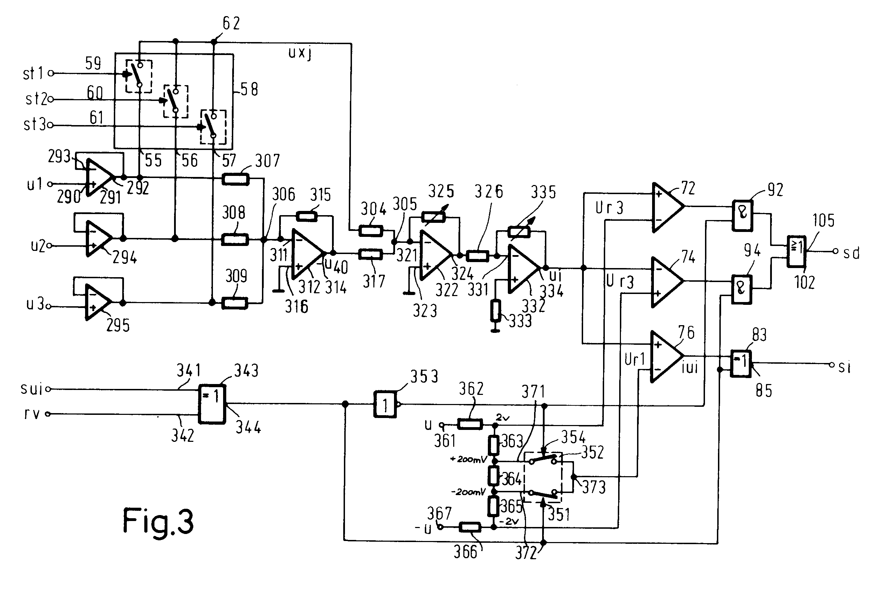

In Fig. 3 ist die Positionsmeßschaltung 3 in einem detaillierten Schaltbild dargestellt. Den Eingängen 59, 60 und 61 des Analogmultiplexers 58 sind die Steuersignale st1, st2 und st3 der Verknüpfungsschaltung 12 der Signalformerschaltung 1 zugeführt. Das Signal $u_1$ ist auf einen positiven Eingang 290 eines Operationsverstärkers 291 geführt, dessen Ausgang 292 mit negativem Eingang 293 verbunden ist. Der Ausgang 292 des Operationsverstärkers 291 ist ferner mit dem Eingang 55 des Analogmultiplexers verbunden. In gleicher Weise ist das Signal $u_2$ über einen Operationsverstärker 294 dem Eingang 56 und das Signal $u_3$ über einen Operationsverstärker 295 dem Eingang 57 des Analogmultiplexers 58 zugeführt. Der Analogmultiplexer 58 ist so geschaltet, daß das am Einang 55 anliegende Signal dann auf seinen Ausgang 62 geschaltet wird, wenn das Signal st1 High-Pegel hat. Gleiches gilt für den Eingang 56 und das Signal st2 und den Eingang 57 und das Signal st3. Das Ausgangssignal 62 setzt sich bei entsprechend gewählten Steuersignalen st1, st2, st3 aus den Teilintervallen der Wicklungsspannungen $u_1$, $u_2$ und $u_3$ zusammen, in denen Ausgleichsvorgänge und anschließend die induzierte Spannung auftreten. Das Signal des Ausganges 62 des Analogmultiplexes 58 wird mit $u_{xj}$ bezeichnet und über einen Widerstand 304 einem Verbindungspunkt 305 zugeführt. Ein weiterer Verbindungspunkt 306 ist über einen Widerstand 307 mit dem Ausgang 292 des Operationsverstärkers 291 verbunden. In gleicher Weise sind der Operationsverstärker 294 über einen Widerstand 308 und der Operationsverstärker 295 über einen Widerstand 309 mit dem Verbindungspunkt 306 verbunden. Die Widerstände 307, 308 und 309 müssen dabei den gleichen Widerstandswert haben, damit die Spannungen $u_1$, $u_2$ und $u_3$ am Verbindungspunkt 306 jeweils mit dem Faktor 1/3 bewertet erscheinen. Der Verbindungspunkt 306 ist mit einem negativen Eingang 311 eines Operationsverstärkers 312 verbunden, dessen Ausgang 314 über einen Widerstand 315 auf den negativen Eingang 311 des Operationsverstärkers 312 zurückgeführt ist. Ein positiver Eingang 316 des Operationsverstärkers 312 ist auf Masse geführt. Der Ausgang 314 des Operationsverstärkers 312 liefert das Signal $-u_{40}$ das über einen Widerstand 317 dem Verbindungspunkt 305 zugeführt wird. Die Widerstände 304 und 317 müssen gleichen Widerstandswert haben, damit die Signale $u_{xj}$ und $-u_{40}$ am Verbindungspunkt 305 gleich bewertet erscheinen. Der Verbindungspunkt 305 ist einem negativen Eingang 321 eines Operationsverstärkers 322 zugeführt, dessen positiver Eingang 323 mit Masse verbunden und dessen Ausgang 324 über einen regelbaren Widerstand 325 auf den negativen Eingang 321 zurückgeführt ist. Der Ausgang 324 des Operationsverstärkers 322 ist über einen Widerstand 326 mit einem negativen Eingang 331 eines Operationsverstärers 332 verbunden, dessen positiver Eingang über einen Widerstand 333 auf Masse geführt und dessen Ausgang 334 über einen regelbaren Widerstand 335 auf seinen negativen Eingang 331 zurückgeführt ist. Der Ausgang 334 des Operationsverstärkers 332 führt das Signal $u_i$, d. h. also die berechnete Meßspannung.

Der Positionsmeßschaltung 3 sind ferner das aus der Signalformerschaltung 1 stammende Signal sui und ein Signal rv zugeführt, das die Laufrichtung des Motors angibt. Diese beiden Signale sind auf zwei Eingänge 341 und 342 eines Exclusiv-Oder-Gatters 343 geführt. Ein Ausgang 344 des Exclusiv-Oder-Gatters 343 ist zum einen direkt auf einen ersten Eingang 351 eines Umschalters 352 und zum anderen über einen Inverter 353 auf einen zweiten Eingang 354 des Umschalters 352 geführt. Der positive Pol 361 einer in der Figur nicht näher dargestellten Spannungsquelle ist über fünf in Reihe geschaltete Widerstände 362, 363, 364, 365 und 366 mit dem negativen Pol 367 der Spannungsquelle verbunden. Die an den Polen 361 und 367 der Spannungsquelle anliegenden Spannungen sind symmetrisch zur Masse. Die Werte der Spannungen und der Widerstände 362, 363, 364, 365 und 366 sind so gewählt, daß zwischen den Widerständen 362 und 363 eine Spannung von +2 V, zwischen den Widerständen 363 und 364 eine Spannung von +200 mV, zwischen den Widerständen 364 und 365 eine Spannung von -200 mV und zwischen den Widerständen 365 und 366 eine Spannung von -2 V gegen Masse anliegt. Die Spannung von +200 mV wird einem dritten Eingang 371 des Umschalters 352 und die -200 mV-Spannung einem vierten Eingang 372 des Umschalters 352 zugeführt. Der Umschalter 352 wird gesteuert durch die beiden Eingänge 351 und 354, an denen die Oder-Verknüpfung des sui-Signals und des rv-Signals einmal in invertierter und einmal in nicht-invertierter Form anliegt. Der Umschalter 352 schaltet nun in Abhängigkeit von diesen Signalen entweder die +200 mV-Spannung oder die -200 mV-Spannung an seinen Ausgang 373. Dies geschieht in der Weise, daß bei High-Pegel des sui-Signals der Ausgang 373 eine Spannung von -200 mV führt und bei Low-Pegel des sui-Signals der Ausgang 373 eine Spannung von +200 mV führt. Dieser Ausgang 373 des Schalters 352 liefert die Vergleichsspannung $U_{r1}$. Die zwischen dem Widerstand 362 und 363 gegen Masse abgegriffene Spannung von +2 V stellt die Vergleichsspannung $U_{r3}$ und die zwischen den Widerständen 365 und 366 gegen Masse abgegriffene Spannung von -2 V die Vergleichsspannung $U_{r2}$ dar.

Die drei Vergleichsspannungen $U_{r1}$, $U_{r2}$, $U_{r3}$ und die Meßspannung $u_i$ werden entsprechend der Positionsmeßschaltung 3 in Fig. 1 den drei Komparatoren 72, 74 und 76 zugeführt, deren Ausgänge über logische Gatter 92, 94, 83 und 102 miteinander verbunden sind. Der Ausgang 105 des Gatters 102 liefert dabei das Signal sd und der Ausgang 85 des Gatters 83 das Vergleichssignal si.

Hat z. B. das Soll-Phasensignal High-Pegel, dann ist die Vergleichsspannung $U_{r1}$ negativ. Diese wird nun mit der Meßspannung $u_i$ durch den Komparator 76 verglichen. Ist $u_i < U_{r1}$, so hat das Signal si High-Pegel, ist jedoch $u_i > U_{r1}$, hat si Low-Pegel. Das Signal sd hat immer dann High-Pegel, wenn die Meßspannung $u_i$ die Vergleichsspannung $U_{r3}$ über- oder die Vergleichsspannung $U_{r2}$ unterschreitet.

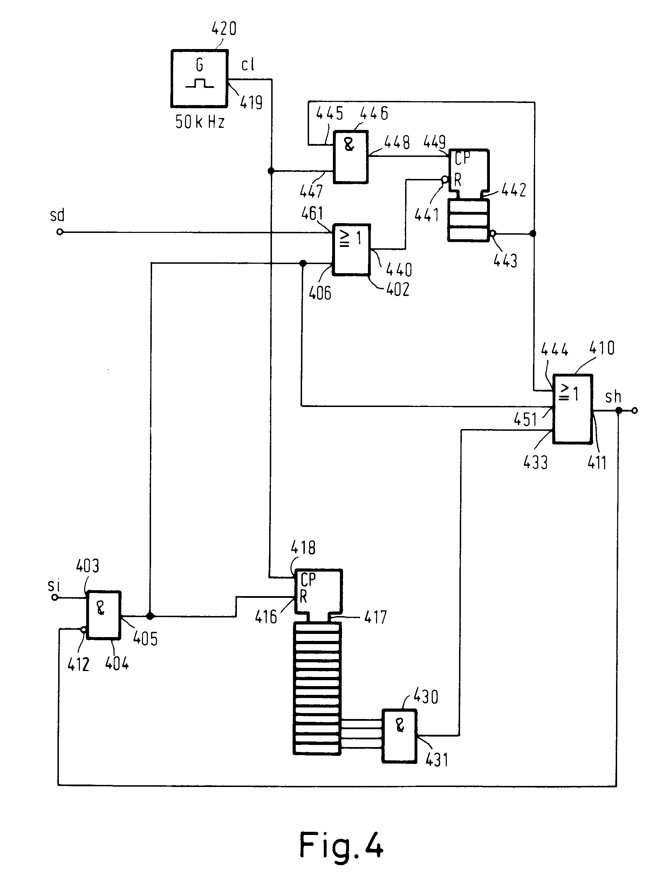

In Fig. 4 ist die Verzögerungsschaltung 4 nach Fig. 1 in einem detaillierten Schaltbild dargestellt. Das Signal sd ist einem ersten Eingang 401 eines Oder-Gatters 402 zugeführt. Das Signal si ist einem ersten Eingang 403 eines Und-Gatters 404 zugeführt, dessen Ausgang 405 mit dem zweiten Eingang 406 des Oder-Gatters 402 verbunden ist. Ein Oder-Gatter 410 liefert an seinem Ausgang 411 das Schiebesignal sh. Dieses Schiebesignal sh wird in der Steuerschaltung zum einen dem Eingang 13 des Schieberegisters 5 zugeführt, zum anderen innerhalb der Verzögerungsschaltung einem zweiten, invertierenden Eingang 412 des Und-Gatters 404. Der Ausgang 405 des Und-Gatters 404 ist außer dem Eingang 403 des Oder-Gatters 402 auch einem Reset-Eingang 416 eines Schieberegisters 417 zugeführt. Ein Schiebeeingang 418 des Schieberegissters 417 ist mit dem Ausgang 419 eines Rechteck-Generators 420 verbunden, dessen Ausgangssignal eine Frequenz von 50 kHz aufweist. Das Schieberegister weist vierzehn hintereinander geschaltete Speicher auf, von denen die Ausgänge der letzten vier Speicher auf vier Eingänge eines Und-Gatters 430 geführt sind. Ein Ausgang 431 des Und-Gatters 430 ist auf einen Eingang 433 des Und-Gatters 410 geführt.

Ein Ausgang 440 des Oder-Gatters 402 ist auf einen invertierten Reset-Eingang 441 eines Schieberegisters 442 geführt, das drei hintereinander geschaltete Speicherstellen aufweist. Die letzte Speicherstelle ist mit einem invertierenden Ausgang 443 zum einen auf einen Eingang 444 des Oder-Gatters 410 und zum anderen auf einen Eingang 445 eines Und-Gatters 446 geführt. Ein zweiter Eingang 447 des Und-Gatters 446 ist mit dem 50 kHz-Signal des Generators 420 verbunden. Ein Ausgang 448 des Und-Gatters 446 ist mit einem Schiebeeingang 449 des Schieberegisters 442 verbunden. Ein Eingang 451 des oder-Gatters 410, dessen Ausgang 411 das sh-Signal liefert, ist mit dem Ausgang 405 des Und-Gatters 404 verbunden, dessen Eingängen 403 und 412 das si-Signal und das invertierte sh-Signal zugeführt wird.

Die Funktionsweise der Verzögerungsschaltung ist folgende:
Durch einen (si $\wedge$ $\overline{sh}$)-Puls, der selbst auf einen Eingang des Oder-Gatters 410 geführt ist, wird das Schieberegister 442 zurückgesetzt. Dadurch erscheint am invertierten Ausgang 443 sofort ein High-Pegel, der einerseits auf einen Eingang des Oder-Gatters 410 geführt ist, andererseits aber über das Und-Gatter 446 das Weitertakten des Schieberegisters 442 ermöglicht. Dieses würde nun so lange weitergetaktet, bis die Speicherstelle wieder gesetzt ist, so daß der invertierte Ausgang Low-Pegel hat. Im normalen Betrieb wird das Schieberegister jedoch vorher durch einen sd-Puls wieder zurückgesetzt. Hinter dem sd-Puls, wenn der Rücksetzvorgang des Schieberegisters 442 beendet ist, wird wiederum im Schieberegister ein Speicher nach dem anderen gesetzt, bis am invertierten Ausgang Low-Pegel auftritt, wodurch zum einen der Ausgang 411 des Oder-Gatters 410 wieder auf Low geht, zum anderen das Weitertakten des Schieberegisters 442 durch das Und-Gatter 446 gesperrt wird. Im normalen Betriebszustand wird also nach jedem (si $\wedge$ $\overline{sh}$)-Puls das sh-Signal auf High-Pegel gehen, bis nach dem sd-Signal die durch das Schieberegister 442 vorgegebene Verzögerungszeit abgelaufen ist, wonach das sh-Signal wieder auf Low-Pegel geht.

Wenn der Motor in diesem Zustand läuft, d. h. wenn die Kommutierung in richtiger Phase zur Läuferposition ist und regelmäßig immer wieder sh-Pulse erzeugt werden, so wird das Schieberegister 417 durch die (si $\wedge$ $\overline{sh}$)-Pulse immer wieder zurückgesetzt. Geschieht dies nicht und wird auch die letzte Speicherstelle des Schieberegisters 417 gesetzt, so erscheint am Ausgang 431 des Und-Gatters 430 eine Eins, d. h. am Ausgang 411 des Oder-Gatters 410 ein sh-Puls. Durch diesen Puls wird das Schieberegister 417 selbst wieder zurückgesetzt. Dies bedeutet, daß bei einem Stillstand des Motors oder einer extrem niedrigen Drehzahl, d. h. also wenn keine sh-Pulse mehr erzeugt werden oder diese einen sehr großen zeitlichen Abstand haben, mittels des Schieberegisters 417 ein sh-Puls zwangsweise erzeugt wird.

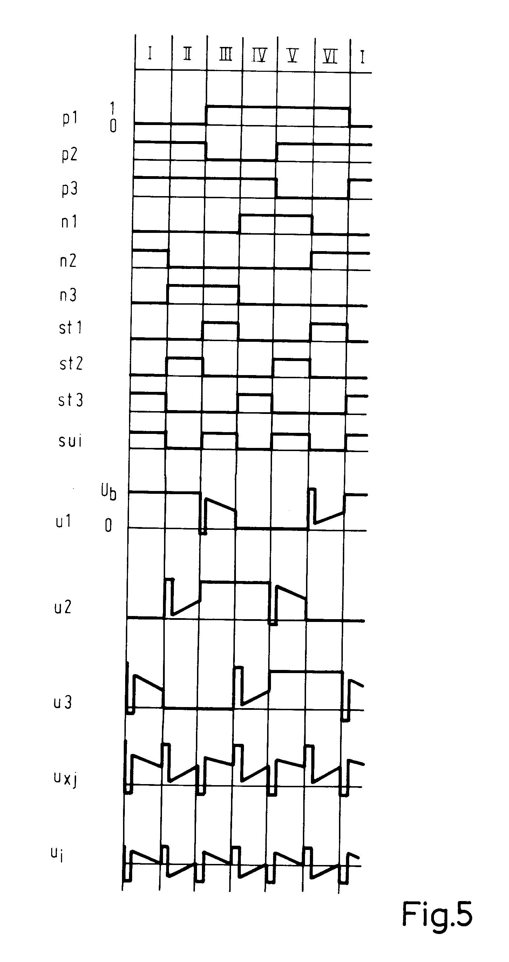

In den Fig. 5, 6 und 7 sind einige, in der Steuerschaltung auftretende Signale und Spannungen dargestellt. Die Verweise auf einzelne Elemente der Steuerschaltung in den Figurenbeschreibungen der Fig.

5, 6 und 7 beziehen sich auf das Blockschaltbild der Steuerschaltung, das in Fig. 1 dargestellt ist.

In Fig. 5 sind einige Signale und Spannungsverläufe der Steuerschaltung für sechs Teilintervalle dargestellt. Die Teilintervalle I bis VI werden nacheinander in zyklischer Folge durchlaufen und entsprechen den sechs Schaltzuständen des Schieberegisters 13 der Signalformerschaltung 1. In Fig. 5 sind für diese sechs Teilintervalle zunächst die Signale $p_1$, $p_2$, $p_3$, $n_1$, $n_2$ und $n_3$ dargestellt. Die Signale $p_1$, $p_2$ und $p_3$ schalten die Wicklungsanschlüsse 21, 31 und 41 mittels der Transistoren 25, 35 und 45 an den positiven Pol der Stromquelle. Das Signal $p_1$ hat während der Teilintervalle I und II Low-Pegel. Während dieser Teilintervalle wird der Transistor 25 durchgeschaltet, so daß der Wicklungsanschluß 21 an den Plus-Pol der Stromquelle geschaltet wird. Während der Intervalle III bis VI hat das Signal $p_1$ High-Pegel, so daß der Transistor 25 gesperrt ist. Entsprechend schalten die Signale $p_2$ und $p_3$ die Wicklungsanschlüsse 31 und 41 an die Stromquelle. Das Signal $p_2$ ist während der Teilintervalle III und IV und das Signal $p_3$ während der Teilintervalle V und VI auf Low-Pegel, so daß die entsprechenden Wicklungsanschlüsse während dieser Zeiten an den Plus-Pol der Stromquelle geschaltet werden. Die Signale $n_1$, $n_2$ und $n_3$ schalten mittels der Transistoren 26, 36 und 46 die Wicklungsanschlüsse 21, 31 und 41 an den Minus-Pol der Stromquelle. Die Transistoren 26, 36 und 46 werden leitend, wenn die Signale $n_1$, $n_2$ und $n_3$ High-Pegel haben. Dies ist für das Signal $n_1$ während der Teilintervalle IV und V, für das Signal $n_2$ während der Teilintervalle I und VI und für das Signal $n_3$ während der Teilintervalle II und III der Fall. Ebenso wie die Signale $p_1$ bis $n_3$ werden auch die ebenfalls in der Figur dargestellten Signale st1, st2, st3 und sui in der Verknüpfungsschaltung 12 der Signalformerschaltung 1 gewonnen. Das Signal st1 hat immer dann High-Pegel, wenn der Wicklungsanschluß 21 weder an den positiven noch an den negativen Pol der Stromquelle geschaltet ist. Dies ist bei dem Signal st1 während der Teilintervalle III und VI der Fall. Für die Signale st2 und st3 gilt Entsprechendes; das Signal st2 hat High-Pegel während der Teilintervalle II und V und das Signal st3 während der Teilintervalle I und IV. Die Signale st1, st2 und st3 geben also jeweils die Teilintervalle an, in denen in der jeweiligen Wicklung zunächst Ausgleichsvorgänge und anschließend induzierte Spannungen auftreten. Das Soll-Vorzeichensignal sui hat immer dann High-Pegel, wenn in einem der drei Wicklungsanschlüsse 21, 31, 41 Ausgleichsvorgänge mit anschließenden induzierten Spannungen auftreten, nachdem der entsprechende Wicklungsanschluß von dem positiven Pol der Stromquelle weggeschaltet wurde. Dies ist der Fall während der Teilintervalle I, III und V.

In Fig. 5 ebenfalls dargestellt sind die Spannungsverläufe u1, u2 und u3, die an den Wicklungsanschlüssen 21, 31 und 41 während der Teilintervalle auftreten. Die Wicklung 21 ist während der Teilintervalle I und II, ausgelöst durch das Signal $p_1$, das während dieser Teilintervalle Low-Pegel hat, an den positiven Pol der Stromquelle geschaltet. Während des Teilintervalls III ist das Signal $p_1$ auf High-Pegel und das Signal $n_1$ auf Low-Pegel, so daß die Wicklung weder an den positiven noch an den negativen Pol der Stromquelle geschaltet ist. In der Wicklung treten während dieses Teilintervalls zunächst ein Ausgleichsvorgang auf, während dessen die Spannung vorübergehend auf einen Wert unter Null Volt sinkt. Während dieser Zeit ist die Diode 24 leitend und führt den auftretenden Ausgleichsstrom. Sperrt anschließend die Diode 24 wieder, so wird die in die Wicklung induzierte Spannung meßbar.

Diese induzierte Spannung hat nach dem Ausgleichsvorgang eine positive Spannung und fällt während des Teilintervalls III auf etwa den halben Wert ab. Während der Teilintervalle IV und V wird dann der Wicklungsanschluß 21 an den negativen Pol Pol der Stromquelle geschaltet, was dadurch ausgelöst wird, daß das Signal $n_1$ während dieser Teilintervalle High-Pegel hat. Im Anschluß treten im Teilintervall VI wiederum zunächst ein Ausgleichsvorgang und anschließend die induzierte Spannung auf. Die Spannungsverläufe u2 und u3 haben im Prinzip den gleichen Verlauf, sind jedoch gegenüber dem Spannungsverlauf u1 um je zwei Teilintervalle verschoben.

Ferner ist in Fig. 5 das Signal $u_{xj}$ dargestellt, das am Ausgang 62 des Analogmultiplexers 58 der Positionsmeßschaltung 3 auftritt. Dieses Signal $u_{xj}$ ist genau aus den Teilintervallen der drei Wicklungsspannungen u1, u2 und u3 zusammengesetzt, in denen Ausgleichsvorgänge und anschließend induzierte Spannungen auftreten. Der ebenfalls dargestellte Spannungsverlauf $u_i$ stellt die Meßspannung dar, die am Ausgang 65 des Operationsverstärkers 64 anliegt. Diese Meßspannung hat einen ähnlichen Verlauf wie das Signal $u_{xj}$, ist jedoch symmetrisch zur Null-Linie.

Die Spannungsverläufe u1, u2, u3, $u_{xj}$ und $u_i$ sind in Fig. 5 idealisiert dargestellt, d. h. evtl. auftretende Überschwinger in Form parasitärer Null-Stellen sind nicht dargestellt.

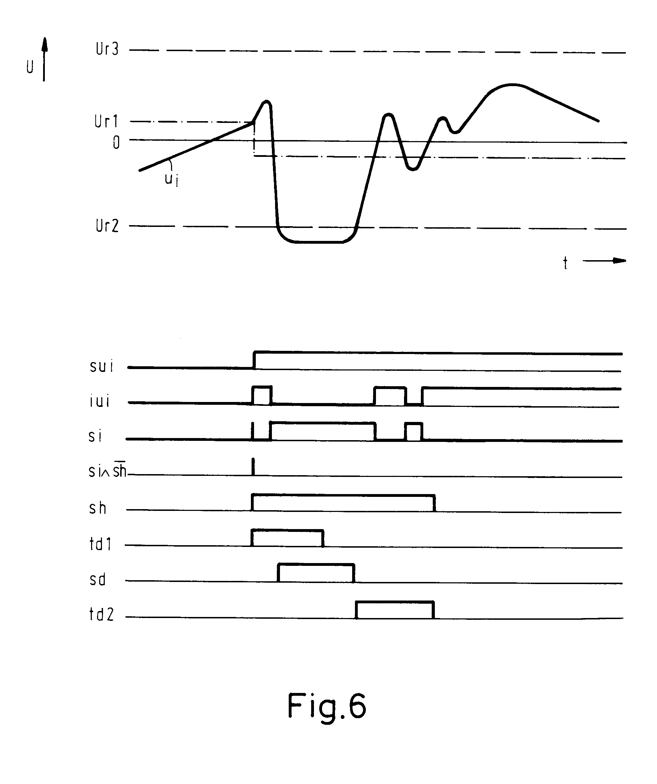

In Fig. 6 ist die Meßspannung $u_i$ dargestellt, wie sie z. B. am Ende des Teilintervalles II und zu Beginn des Teilintervalles III aussieht. Die Meßspannung $u_i$ ist hier nicht mehr idealisiert dargestellt; es treten insbesondere nach dem Ausgleichsvorgang Nachschwingungen auf, während deren die Spannung um den Null-Punkt schwankt. Erst anschließend stabilisiert sich die induzierte Spannung. Für die gleiche Zeitspanne, wie das Signal $u_i$, sind in Fig. 5 ebenfalls dargestellt die Signale sui, iui, si, $(si \wedge \overline{sh})$ (Ausgang des Und-Registers 119 der Verzögerungsschaltung 4), sh, $t_{d1}$, sd und $t_{d2}$. Die Signale zeigen einen Kommutierungsablauf, wie er beispielsweise im Übergangsbereich der Teilintervalle II und III auftritt, und zwar bei normalem Betrieb des Motors, d. h. bei richtiger Phasenlage des Läufes und der Kommutierung zueinander. In das Diagramm der Meßspannung $u_i$ sind ebenfalls eingetragen die Vergleichsspannungen $U_{r1}$, $U_{r2}$ und $U_{r3}$. Die kleine Vergleichsspannung $U_{r1}$ hat positiven Wert, wenn das Soll-Phasensignal sui Low-Pegel hat, und negativen Wert, wenn das Signal sui High-Pegel hat. Das Signal $u_i$ ist zunächst negativ, anschließend positiv, jedoch kleiner als $U_{r1}$. Während dieser Zeiten ist das Signal iui auf Low-Pegel. Sobald die Meßspannung $u_i$ größer ist als das Signal $U_{r1}$, geht das Signal iui auf High-Pegel. Da zu diesem Zeitpunkt das Signal sui wegen noch nicht weitergeschalteter Kommutierung noch auf Low-Pegel ist, geht das Signal si auf High-Pegel, da das Vorzeichen der Meßspannung $u_i$ nicht mit dem durch das Soll-Phasensignal sui vorgegebenen Vorzeichen übereinstimmt. Sobald das Signal $s_i$ auf High-Pegel geht, wird in der Verzögerungsschaltung 4 ein sh-Puls erzeugt. Durch diesen sh-Puls wird das Schieberegister 13 weitergeschaltet. Dies wiederum hat zur Folge, daß das Signal sui auf High-Pegel geht. Da nun die Meßspannung das durch das Soll-Phasensignal sui vorgegebene Vorzeichen hat, geht das Signal si wieder auf Low-Pegel. Während des anschließenden Ausgleichsvorganges unterschreitet die Meßspannung jedoch wieder die Referenzspannung $U_{r1}$, so daß das Signal iui wieder auf Low-Pegel und das Signal si wieder auf High-Pegel geht. Während der nach dem Ausgleichsvorgang auftretenden Ausschwingvorgänge und der dadurch bedingten parasitären Null-Stellen wechseln beide Signale mehrfach den Pegel. Während der gesamten Zeit, in der der Ausgleichsvorgang und die anschließenden parasitären Null-Stellen auftreten, wird das Schiebesignal sh noch auf High-Pegel gehalten. Erst, nachdem das Signal sh wieder auf Low-Pegel gegangen ist, kann bei einem Wechsel des si-Signals von Low-Pegel auf High-Pegel eine neue Kommutierung ausgelöst werden. Die Breite des sh-Signals ist also so gewählt, daß es während der Ausgleichsvorgänge und der gegebenenfalls auftretenden parasitären Null-Stellen immer High-Pegel hat. Die Breite des Schiebepulses sh wird durch die Breite der durch die Impulsformer 110 und 122 abgegebenen Pulse bestimmt. Der Impulsformer 122 liefert einen Puls der Breite $t_{d1}$, nachdem das si-Signal von Low- auf High-Pegel übergegangen ist. Der Impulsformer 110 einen Puls der Breite $t_{d2}$, nachdem das Signal sd von High- auf Low-Pegel gewechselt hat. Das Signal sd hat immer dann High-Pegel, wenn die Meßspannung die Referenzspannung $U_{r2}$ unter- oder die Referenzspannung $U_{r3}$ überschreitet. In dem in Fig. 6 dargestellten Beispiel unterschreitet die Meßspannung die Referenzspannung $U_{r2}$ während des Ausgleichsvorganges. Nachdem der Puls $t_{d2}$ beendet ist, geht auch der sh-Puls auf Low-Pegel. Es wird nun die nächste Kommutierung ausgelöst, sobald das durch Vergleich mit der Referenzspannung $U_{r1}$ gewonnene Vorzeichen der Meßspannung $u_i$ und das durch das Soll-Vorzeichensignal sui angegebene Vorzeichen nicht mehr übereinstimmen, d. h. sobald das Signal si wieder auf High-Pegel geht. In dem in Fig. 6 dargestellten Beispiel hat die Meßspannung, nachdem der sh-Puls wieder auf Low-Pegel gegangen ist, das richtige Vorzeichen, d. h. der Läufer hat eine für den gegebenen Kommutierungszustand richtige Position. Die nächste Kommutierung wird dann ausgelöst, wenn die Meßspannung die nun negative Referenzspannung $U_{r1}$ unterschreitet, was in der Figur nicht mehr dargestellt ist.

Die Meßspannung $u_i$ wird also als Kriterium für die richtige Kommutierung nur während der Zeiten herangezogen, in denen keine Ausgleichsvorgänge oder gegebenenfalls vor oder hinter den Ausgleichsvorgängen vorhandene parasitäre Null-Stellen auftreten.

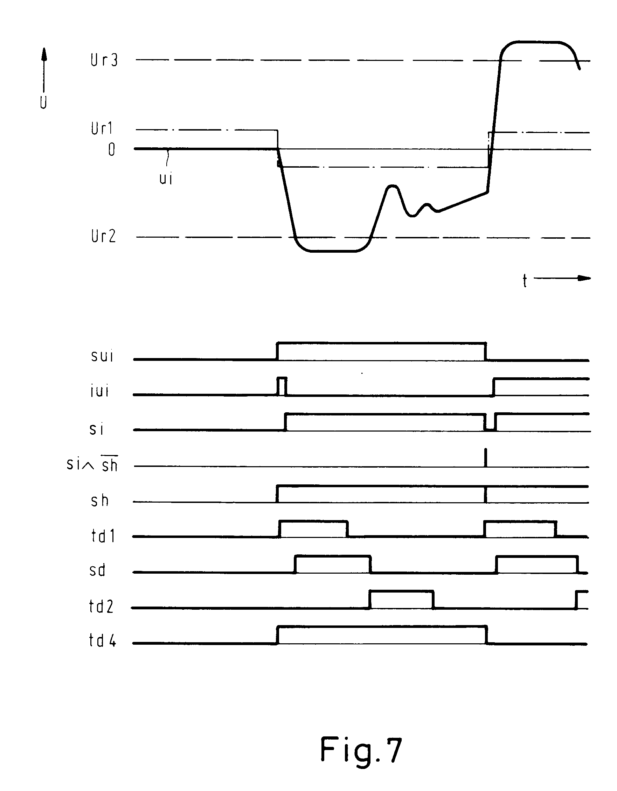

Das Diagramm in Fig. 7 zeigt die gleichen Spannungen und Signale wie die Fig. 5, jedoch wird in ihr davon ausgegangen, daß der Motor zunächst stillsteht und daß nach dem Anlauf des Läufers dieser eine zu dem gegebenen Kommutierungszustand falsche Position hat.

Bedingt durch den Stillstand des Läufers wird in die Läuferwicklungen keine Spannung induziert. Dies bedeutet, daß die Meßspannung zunächst Null-Pegel hat. Es wird also durch das si-Signal keine Kommutierung ausgelöst. War dies während einer Zeitspannung $t_{d3}$ der Fall, so wird in der Verzögerungsschaltung ein Puls der Breite $t_{d4}$ erzeugt, der in Fig. 7 ebenfalls dargestellt ist. Durch diesen Puls wird ein sh-Puls ausgelöst, d. h. die Kommutierung des Motors wird einen Schritt weitergeschaltet. In dem dargestellten Beispiel wechselt nun das sui-Signal von Low- auf High-Pegel. Der dem Kommutierungsfortschalten nachfolgende Ausgleichsvorgang führt dazu, daß die Meßspannung $u_i$ zunächst noch etwas größer als $U_{r1}$ ist, dann jedoch $U_{r1}$ und später auch $U_{r2}$ unterschreitet. Das Signal iui ist infolgedessen kurz nach dem Kommutieren kurz auf High-Pegel, um anschließend auf Low-Pegel zu gehen. Während der Zeiten, in denen das iui-Signal auf Low-Pegel ist, geht das $s_i$-Signal auf High-Pegel, da durch das soll-Vorzeichensignal sui ein positives Vorzeichen vorgegeben wird, das tatsächliche Vorzeichen der Meßspannung, verglichen mit der Referenzspannung $U_{r1}$, jedoch negativ ist. Mit dem Übergang von Low- auf High-Pegel des Schiebepulses sh wurde ein Puls $t_{d1}$ erzeugt. Während der Zeit, in der die Meßspannung $u_i$ die Referenzspannung $U_{r2}$ unterschreitet, wird ein sd-Puls erzeugt, dessen Übergang von Low- auf High-Pegel einen Puls der Breite $t_{d2}$ auslöst. Die Breite des Pulses $t_{d4}$, der die Kommutierung ausgelöst hatte, ist jedoch so gewählt, daß sein Übergang von High- auf Low-Pegel auf jeden Fall hinter dem $t_{d2}$-Puls liegt. Geht der $t_{d4}$-Puls nun wieder von

EP 0 231 046 B1

High-auf Low-Pegel und infolgedessen auch der sh-Puls, erfolgt wiederum der Vorzeichenvergleich der Signale sui und iui.

In dem vorliegenden Beispiel ist die fiktive Sternspannung kleiner als die Referenzspannung $U_{r1}$. Das durch das sui-Signal vorgegebene Vorzeichen ist jedoch positiv (sui hat High-Pegel). Dies bedeutet, daß beim Übergang des sh-Pulses von High- auf Low-Pegel das si-Signal High-Pegel hat. Infolgedessen wird in der Verzögerungsschaltung 4 am Ausgang 121 des Gatters 119 ein Puls erzeugt. Dieser Puls (logisch si sh) löst sofort einen neuen sh-Puls aus. Es wird also sofort einen Kommutierungsschritt weitergeschaltet. Im folgenden wird (in Fig. 7 nicht dargestellt) nach jedem sh-Puls festgestellt, ob die fiktive Sternspannung das durch das Soll-Phasensignal sui vorgegebene Vorzeichen hat. Ist dies nicht der Fall, wird sofort der nächste sh-Puls und damit der nächste Kommutierungsschritt ausgelöst. Dies geschieht so oft, bis die Meßspannung das richtige Vorzeichen hat, d. h. bis der zu der jeweiligen Läuferposition richtige Kommutierungszustand der Ständerwicklungen erreicht ist. Sobald dies geschehen ist, erfolgt das Weiterschalten der Kommutierung entsprechend dem in Fig. 6 dargestellten Beispiel.

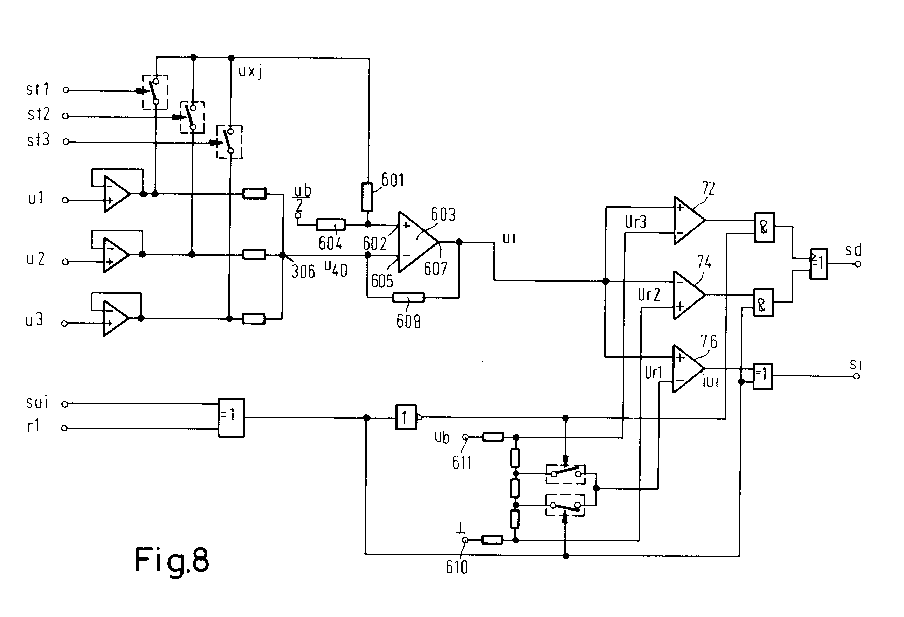

In Fig. 8 ist das Schaltbild einer Variante der Positionsmeßschaltung nach Fig. 3 dargestellt. Bei dieser Schaltungsvariante ist keine Spannungsquelle erforderlich, welche zwei Spannungen liefert, die symmetrisch zur Masse liegen. In dieser Schaltungsvariante wird das Signal uxj und die berechnete Sternpunktspannung $u_{40}$, die am Verbindungspunkt 306 anliegt, in gleicher Weise gewonnen wie in der in Fig. 3 dargestellten Schaltung. Das Signal uxj wird über einen Widerstand 601 einem positiven Eingang 602 eines Komparators 603 zugeführt. Dieser Eingang 602 ist ferner über einen Widerstand 604 mit einer Spannung $U_b/2$ verbunden. Die Widerstände 601 und 604 müssen dabei gleiche Werte haben. Ein negativer Eingang 605 des Komparators 603 ist mit der berechneten Sternspannung $u_{40}$ verbunden, welche am Verbindungspunkt 306 anliegt. Ein Ausgang 607 des Komparators 603 ist über einen Widerstand 608 mit seinem negativen Eingang 605 verbunden. Dieser Widerstand 608 muß ein Drittel des Widerstandswertes haben den die Widerstände 307, 308 haben. Am Ausgang 607 des Operationsverstärkers 603 liegt die Meßspannung $u_i$ an. Die weitere Verschaltung der Komparatoren 72 bis 76 und der Ausgangsgatter ist identisch mit der in Fig. 3 dargestellten Schaltung. Ebenso ist die Verarbeitung der Signale sui und rv, die Verschaltung der Spannungsquelle und die Beschaltung des Umschalters 352 identisch mit der in Fig. 3 dargestellten Schaltungsvariante. Es ist lediglich der Widerstand 366 mit einem Masseanschluß 610 einer Spannungsquelle und der Widerstand 362 mit dem Pluspol 311 der gleichen Spannungsquelle verbunden. Der Wert dieser positiven Spannung ist $U_b$ unddamit doppelt so groß wie der Wert der Spannung, mit dem der Widerstand 604 verbunden ist.

Der Unterschied dieser in Fig. 8 dargestellten Schaltungsvariante zu der in Fig. 3 dargestellten ist, wie bereits erwähnt, zum einen der, daß bei der in Fig. 8 dargestellten Schaltungsvariante keine Spannungsquelle notwendig ist, welche zwei symmetrisch zur Masse liegende Spannungen liefert. Aus diesem Grunde wird in der in Fig. 8 dargestellten Schaltungsvariante die Meßspannung $u_i$, die den Komparatoren 72 bis 76 zugeführt wird, um die Gleichspannung $U_b/2$ gegenüber der Meßspannung in Fig. 3 angehoben. Die den Komparatoren 72 bis 76 zugeführten Vergleichsspannungen werden in ihrem Potential um den gleichen Gleichspannungswert verschoben.

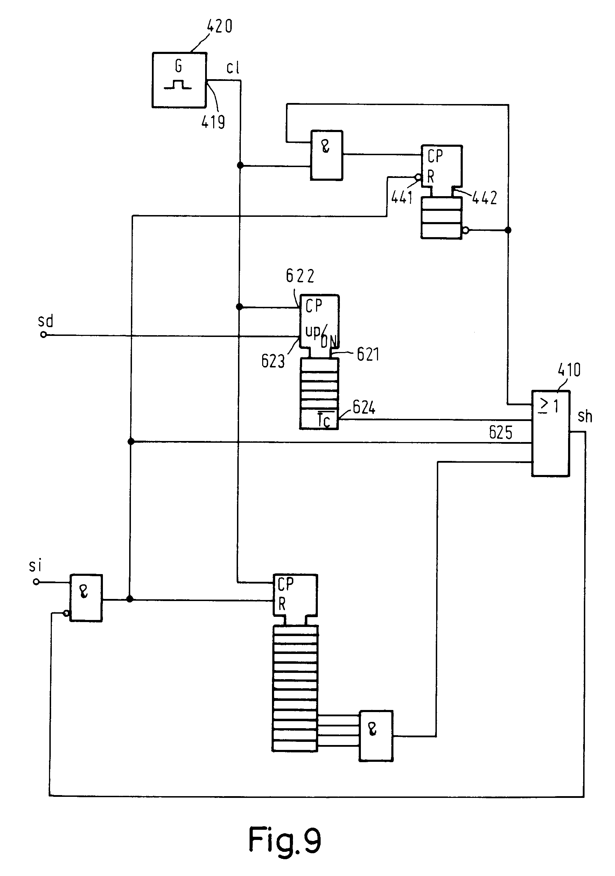

In Fig. 9 ist eine Variante der Verzögerungsschaltung nach Fig. 4 dargestellt. Bei dieser Variante ist die Zeit, während der das Vergleichssignal si nach jedem Ausgleichsvorgang ausgeblendet wird, abhängig von der Dauer des Ausgleichsvorganges, d. h. des Signales sd. Die in Fig. 9 dargestellte Schaltungsvariante unterscheidet sich von der in Fig. 4 dargestellten dadurch, daß ein zusätzlicher Zähler 621 vorgesehen ist, dessen Takteingang mit dem Ausgang 419 des Generators 420 verbunden ist. Ein weiterer Eingang 623 des Zählers 621 ist mit dem Signal sd verbunden. Über diesen Eingang 623 wird der Zähler umgeschaltet, d. h. je nach Pegel des Signales sd zählt der Zähler 621 aufwärts oder abwärts. Ein Übertragsausgang 624 des Zählers 621 ist mit einem zusätzlichen Eingang 625 des Oder-Gatters 410 verbunden. Der Reset-Eingang 441 des Zählers 442 ist nunmehr direkt mit dem Ausgang 405 des Und-Gatters 404 verbunden, so daß der Zähler 442 durch einen Puls des sd-Signales nicht mehr zurückgesetzt wird. Es wird also in dieser Schaltungsvariante nach jedem (si sh)-Puls das sh-Signal zunächst auf High-Pegel gehen und erst dann wieder auf Low-Pegel gehen, wenn der Zähler 621 nach dem Ausbleiben des sd-Signales wieder auf Null zurückgezählt hat. Die Verzögerungszeit, nach der das sh-Signal wieder auf Low-Pegel geht, ist also abhängig von der Länge des sd-Pulses, da der Zähler 621 je nach der Länge des sd-Pulses hochgezählt hat und die gleiche Zeit wieder benötigt, um nach dem Ausbleiben des sd-Signales wieder herunter zu zählen.

**Patentansprüche**

1. Steuerschaltung für einen kollektorlosen Gleichstrommotor ohne Kommutierungssensor mit einem

EP 0 231 046 B1

permanentmagnetischen Läufer beliebiger Polpaarzahl und einem Ständer und wenigstens zwei Wicklungen, die ein Mehrphasen-System bilden, von dem jede Phase in Abhängigkeit von Spannungen ($u_1$ $u_2$ $u_3$), die das permanentmagnetische Feld des Läufers in die Wicklungen induziert, mittels elektronischer Schaltelemente ($p_1$-$p_3$, $n_1$-$n_3$) je nach Kommutierungszustand zur Durchführung von Kommutierungsschritten an den Minus- und/oder Plus-Pol einer Gleichstromquelle schaltbar ist, wobei in der Steuerschaltung ein Vergleichssignal (si) erzeugt wird, das angibt, ob das Vorzeichen derjenigen Wicklungsspannung, die nicht mittels der elektronischen Schaltelemente an die Gleichstromquelle geschaltet ist, mit einem in Abhängigkeit vom jeweiligen Kommutierungszustand vorgegebenen Vorzeichen übereinstimmt, und andernfalls bei nicht übereinstimmendem Vorzeichen kommutiert wird, dadurch gekennzeichnet, daß in der Steuerschaltung

- das Vergleichssignal (si) an einem Ausgang einer Positionsmeßschaltung (3), während der Zeit, in der ein Schiebesignal (sh) am Ausgang einer Verzögerungsschaltung (4) den Wert 1 hat, ausgeblendet wird, wobei die Dauer dieses Schiebesignals (sh) von der Zeit abhängt, in der in den Wicklungen durch Abschalten der elektronischen Schaltelemente in einer Leistungsschaltung (2) bedingte Ausgleichsvorgänge mit möglichen parasitären Null-Stellen auftreten, und
- kommutiert wird, wenn das Schiebesignal (sh), abhängig vom Vergleichssignal, das ausgeblendet wird, wenn, ermittelt durch ein Signal (sd), die Meßspannung eine vorgebbare positive oder negative Spannung über- bzw. unterschreitet, bei nicht übereinstimmenden Vorzeichen einen Ausgangsimpuls abgibt.

2.  Steuerschaltung nach Anspruch 1, dadurch gekennzeichnet, daß
- eine Meßspannung ($u_i$) durch Subtraktion einer herausgeführten oder berechneten Sternpunktspannung von einem Signal ($u_{xj}$) berechnet wird, welches sich aus den Intervallen der Wicklungsspannungen zusammensetzt, in denen die Wicklungen nicht mittels der elektronischen Schaltelemente an die Gleichstromquelle geschaltet sind,
- ein Soll-Phasensignal (sui) erzeugt wird, das das für den jeweils herrschenden Kommutierungszustand des Motors richtige Vorzeichen der Meßspannung vorgibt,
- ein Vergleichssignal (si) erzeugt wird, das angibt, ob die Vorzeichen der Meßspannung ($u_i$) und das von dem Soll-Phasensignal (sui) vorgegebene Vorzeichen gleich sind,
- das Vergleichssignal (si) während der Zeiten für eine vorgegebene Dauer ausgeblendet wird, in denen in den Wicklungen durch Abschalten der elektronischen Schaltelemente bedingte Ausgleichsvorgänge mit möglichen parasitären Null-Stellen auftreten,
- ausgelost durch das Vergleichssignal (si) bei verschiedenen Vorzeichen der Meßspannung ($u_i$) und des durch das Soll-Phasensignal (sui) vorgegebenen Soll-Vorzeichens, die elektronischen Schaltelemente einen Kommutierungsschritt weiter geschaltet werden.

3.  Steuerschaltung nach Anspruch 2, dadurch gekennzeichnet, daß die elektronischen Schaltelemente zusätzlich dann einen Kommutierungsschritt weiter geschaltet werden, wenn die Schaltelemente für eine vorgegebene Zeitdauer nicht durch das Vergleichssignal ($s_i$) weitergeschaltet wurden.

4.  Steuerschaltung nach Anspruch 2 oder 3, dadurch gekennzeichnet, daß die Schaltzustände der elektronischen Schaltelemente und das Soll-Phasensignal (sui) mittels binärer Verknüpfungen der Ausgänge eines Schieberegisters gewonnen werden, das sechs Zustände zyklisch durchläuft und mittels eines Schiebesignals (sh) fortgeschaltet wird, das entweder durch das Vergleichssignal (si) erzeugt wird, oder immer dann, wenn die Schaltelemente für eine vorgegebene Zeitdauer nicht durch das Vergleichssignal (si) weitergeschaltet wurden.

5.  Steuerschaltung nach einem oder mehreren der vorhergehenden Ansprüche, dadurch gekennzeichnet, daß die Meßspannung ($u_i$) mittels eines Analogmultiplexers und einer Analogrechenschaltung ermittelt wird.

6.  Steuerschaltung nach einem oder mehreren der vorhergehenden Ansprüche, dadurch gekennzeichnet, daß das Vergleichssignal (si) während der Zeiten ausgeblendet wird, in denen die Meßspannung ($u_i$) eine vorgegebene positive oder eine vorgegebene negative Spannung ($U_{r3}$, $U_{r2}$) über- bzw. unterschreitet.

7.  Steuerschaltung nach Anspruch 6, dadurch gekennzeichnet, daß das Vergleichssignal (si) an einem Ausgang der Positionsmeßschaltung

13

(3) zur Beseitigung parasitärer Null-Stellen zusätzlich für eine mit einem Verzögerungsglied (122) vorgegebene Zeit (td1) nach jedem Weiterschalten der elektronischen Schaltelemente der Leistungsschaltung (2) und für eine mit einem Verzögerungsglied (110) vorgegebene Zeit (td2) nach jedem Ausgleichsvorgang ausgeblendet wird.

8.  Steuerschaltung nach einem oder mehreren der vorhergehenden Ansprüche, dadurch gekennzeichnet, daß bei der Erzeugung des Vergleichssignals (si) das Vorzeichen der Meßspannung ($u_i$) daraus bestimmt wird, ob die Meßspannung ($u_i$) eine kleine vorgegebene Spannung ($U_{r1}$) über- oder unterschreitet, deren Vorzeichen umgekehrt ist zu dem durch das Soll-Phasensignal (sui) für die Meßspannung ($u_i$) angegebenen Vorzeichen.

9.  Steuerschaltung nach Anspruch 7, dadurch gekennzeichnet, daß die Dauer der durch das Verzögerungsglied (110) vorgegebenen Zeit (td2), während der das Vergleichssignal (si) nach jedem Ausgleichsvorgang ausgeblendet wird, von dessen Dauer abhängt.

## Claims

1.  Control circuit for a collectorless d.c. motor without a commutation sensor and comprising a permanent-magnet rotor having an arbitrary number of pole pairs, a stator and at least two windings forming a multiphase system, of which each phase, depending on voltages (u1, u2, u3) induced in the windings by the permanent-magnet field of the rotor, can be connected to the negative and/or the positive pole of a direct current source by electronic switching elements (p1-p3, n1-n3) to perform commutation steps in accordance with the commutation state, while a comparison signal (si) is generated in the control circuit, which signal denotes whether the sign of the winding voltage not applied to the direct current source by the electronic switching elements corresponds to a sign predetermined as a function of the commutation state and, alternatively, there is commutation when the signals do not correspond, characterized in that in the control circuit
    -   the comparison signal (si) is faded out at an output of a position measuring circuit (3) for the period of time during which a shift signal (sh) at the output of a delay circuit (4) has the 1-value, while the duration of this shift signal (sh) depends on the time during which specific transient effects that may cause spurious zero crossings occur in the windings because the electronic switching elements in a power circuit (2) are turned off, and
    -   in that there is commutation when the shift signal (sh) presents an output pulse in the event of non-matching signals, in dependence on the faded out comparison signal when, detected by means of a signal (sd), that the measuring voltage has exceeded or decreased to below a predeterminable positive or negative voltage.

2.  Control circuit as claimed in Claim 1, characterized in that
    -   a measuring voltage ($u_i$) is computed by subtraction of an externally available or computed star-point voltage from a signal ($u_{xj}$) which comprises those intervals of the winding voltages in which the windings are not connected to the direct current source by means of the electronic switching elements,
    -   a nominal-phase signal (sui) is generated which defines the appropriate sign of the measuring voltage for the instantaneous commutation state of the motor,
    -   a comparison signal (si) is generated which indicates whether the sign of the measuring voltage ($u_i$) and the sign given by the nominal-phase signal (sui) are the same,
    -   the comparison signal (si) is faded out for a given length of time during the intervals in which specific transient effects that may cause spurious zero crossings occur in the windings because the electronic switching elements are turned off,
    -   the electronic switching elements are advanced one commutation step in response to the comparison signal (si) in the case of different signs of the measuring voltage ($u_i$) and the nominal sign given by the nominal-phase signal (sui).

3.  Control circuit as claimed in Claim 2, characterized in that the electronic switching elements are additionally advanced one commutation step if the switching elements have not been advanced by the comparison signal (si) for a predetermined time interval.

4.  Control circuit as claimed in Claim 2 or 3, characterized in that the states of the electronic switching elements and the nominal-phase signal (sui) are determined by binary combinations of the output signals of a shift register which cycles through six positions and which is advanced by means of a shift signal (sh) which is generated either by the comparison signal (si) or always when the switching elements have not been advanced by the comparison signal (si) for a predetermined time interval.

5. Control circuit as claimed in one or more of the preceding Claims, characterized in that the measuring voltage ($u_i$) is determined by means of an analog multiplexer and an analog computing circuit.

6. Control circuit as claimed in one of the preceding Claims, characterized in that the comparison signal (si) is faded out during the time intervals in which the measuring voltage ($u_i$) exceeds a predetermined positive voltage or decreases to below a predetermined negative voltage (Ur3, Ur2 respectively).

7. Control circuit as claimed in Claim 6, characterized in that in order to eliminate spurious zero crossings, the comparison signal (si) is additionally faded out for a time interval (td1) given by a delay element (122) after every switching operation of the electronic switching elements of the power circuit (2) and for a time interval (td2) given by a delay element (110) after every transient effect.

8. Control circuit as claimed in one or more of the preceding Claims, characterized in that during the generation of the comparison signal (si) the sign of the measuring voltage ($u_i$) is determined depending on whether the measuring voltage ($u_i$) exceeds or decreases to below a small predetermined voltage (Ur1) whose sign is opposite to the sign of the measuring voltage ($u_i$) as indicated by the nominal-phase signal (sui).

9. Control circuit as claimed in Claim 7, characterized in that the length of the predetermined time interval (td2) given by the delay element (110), during which the comparison signal (si) is faded out after every transient effect, depends on the duration of the transient effect.

**Revendications**

1. Circuit de commande pour un moteur à courant continu de type sans collecteur, dépourvu d'un capteur de commutation et comportant un rotor à aimantation permanente ayant un nombre arbitraire de paires de pôle, et un stator ainsi qu'au moins deux enroulements formant un système polyphasé dont chaque phase, en fonction de tensions ($U_1$, $U_2$, $U_3$) induites dans les enroulements par le champ magnétique permanent du rotor, au moyen d'éléments commutateurs électroniques (p1-p3, u1-u3), peut être reliée au pôle négatifet/ou pôle positif d'une source de courant continu pour effectuer des étapes de commutation selon l'état de commutation, circuit de commande dans lequel, d'une part, est engendré un signal de comparaison (si) indiquant que le signe de la tension d'enroulement non appliquée à la source de courant continu au moyen des éléments de commutation électroniques, correspond à un signe prédéterminé en fonction de l'état de commutation instantané et, d'autre part, dans le cas contraire, si les signes ne correspondent pas, est effectuée une commutation,
caractérisé en ce que dans le circuit de commande
  - le signal de comparaison (si) présent sur une sortie d'un circuit de mesure de position (3) est supprimé au cours de l'intervalle de temps dans lequel un signal de décalage (sh) sur la sortie d'un circuit à retard (4) présente la valeur 1, la durée de ce signal de décalage (sh) étant fonction du temps pendant lequel, dans les enroulements, se produisent des opérations de comparaison avec des passages par zéro parasites éventuels, déterminées par le blocage des éléments commutateurs électroniques dans un circuit de puissance (2), et
  - est effectuée une commutation si le signal de décalage (sh), en fonction du signal de comparaison, qui est supprimé lorsque la tension de mesure est supérieure ou inférieure à une tension prédéterminable positive ou négative, états qui sont détectés par un signal (sd), fournit une impulsion de sortie si les signes ne correspondent pas.

2. Circuit de commande selon la revendication 1, caractérisé en ce que
  - une tension de mesure ($u_i$) est calculée par soustraction d'une tension de point neutre sortie ou calculée d'un signal ($u_{xj}$) qui comporte les intervalles des tensions d'enroulement dans lesquels les enroulements ne sont pas raccordés par les éléments commutateurs électroniques à la source de courant continu,
  - est engendré un signal de phase nominale (sui) déterminant le signe de la tension de mesure approprié à l'état de commutation instantané du moteur,

- est engendré un signal de comparaison (si) indiquant que le signe de la tension de mesure (u$_i$) et le signe prédéterminé par le signal de phase nominale (sui) sont égaux,
- le signal de comparaison (si) est supprimé pour une durée prédéterminée au cours des intervalles de temps pendant lesquels, dans les enroulements, apparaissent des effets transitoires avec des passages par zéro parasites éventuels, dus à la mise en état de blocage des éléments commutateurs électroniques,
- les éléments commutateurs électroniques sont avancés d'un pas de commutation en réaction au signal de comparaison (si), dans le cas d'une différence entre le signe de la tension de mesure (u$_i$) et le signe nominal prédéterminé par le signal de phase nominale (sui).

3. Circuit de commande selon la revendication 2, caractérisé en ce que les éléments commutateurs électroniques sont avancés d'un pas de commutation supplémentaire si les éléments commutateurs n'ont pas été avancés d'un pas de commutation par le signal de comparaison (si) pendant une durée prédéterminée.

4. Circuit de commande selon les revendications 2 ou 3, caractérisé en ce que les états de commutation des éléments commutateurs électroniques et le signal de phase nominale (sui) sont déterminés par des combinaisons binaires des signaux de sortie d'un registre à décalage (sh) passant de façon cyclique par six états et qui est avancé au moyen d'un signal de décalage engendré soit par le signal de comparaison (si) ou toutes les fois que les éléments commutateurs n'ont pas été avancés d'un pas par le signal de comparaison (si) pendant une durée prédéterminée.

5. Circuit de commande selon une ou plusieurs des revendications précédentes, caractérisé en ce que la tension de mesure (ui) est déterminée au moyen d'un multiplexeur analogique et d'un circuit de calcul analogique.

6. Circuit de commande selon une ou plusieurs des revendications précédentes, caractérisé en ce que le signal de comparaison (si) est supprimé au cours des intervalles de temps pendant lesquels la tension de mesure (u$_i$) est respectivement supérieure et inférieure à des tensions prédéterminées positive (U$_{r3}$) et négative (U$_{r2}$).

7. Circuit de commande selon la revendication 6, caractérisé en ce que, pour éliminer l'influence de passages par zéro parasites, le signal de comparaison (si) présent sur une sortie du circuit de mesure de position (3) est supprimé en outre pendant un intervalle de temps (td1), prédéterminé avec un élément à retard (122), après chaque opération de commutation des éléments commutateurs électroniques du circuit de puissance (2) et, pendant un intervalle de temps (td2), prédéterminé avec un élément à retard (110), après chaque effet transitoire.

8. Circuit de commande selon une ou plusieurs des revendications précédentes, caractérisé en ce que, lors de la génération du signal de comparaison (si), le signe de la tension de mesure (u$_i$) est déterminé en fonction de si la tension de mesure (u$_i$) est supérieure ou inférieure à une faible tension prédéterminée (U$_{r1}$) dont le signe est contraire au signe de la tension de mesure (u$_i$) tel qu'indiqué par le signal de phase nominale (sui).

9. Circuit de commande selon la revendication 7, caractérisé en ce que la durée de l'intervalle de temps (td2), prédéterminé par l'élément à retard (110) et pendant lequel le signal de comparaison (si) est supprimé après chaque effet transitoire, dépend de la durée de l'effet transitoire.

Fig.1

Fig.2

Fig.3

EP 0 231 046 B1

19

EP 0 231 046 B1

Fig.4

20

EP 0 231 046 B1

Fig.5

Fig.6

Fig.7

Fig.8

EP 0 231 046 B1

Fig.9